# EUROPEAN PATENT SPECIFICATION

(11) **EP 1 977 170 B1**
(45) Date of publication and mention of the grant of the patent: **07.02.2018**
(21) Application number: 06823949.0
(22) Date of filing: 06.12.2006
(51) Int. Cl.: F24F 1/00, F25B 49/02

(54) **AIR CONDITIONER AND CONTROL METHOD THEREOF**
KLIMAANLAGE UND STEUERVERFAHREN DAFÜR
CONDITIONNEUR D'AIR ET SON PROCÉDÉ DE COMMANDE

(30) Priority: 24.01.2006 KR 20060007311
(43) Date of publication of application: 08.10.2008
(73) Proprietor: LG Electronics, Inc., Seoul 105-875 (KR)
(72) Inventor: PARK, Gwi-Guen, Kimhae-si, Kyungsangnam-do 621-833 (KR)
(74) Representative: Boult Wade Tennant
(86) International application number: PCT/KR2006/005242
(87) International publication number: WO 2007/086648

(56) References cited:
- EP-A1- 1 271 071
- EP-A1- 1 271 071
- JP-A- H07 167 504
- JP-A- H09 271 135
- JP-A- H10 141 739
- KR-A- 20020 088 643
- KR-B1- 100 225 641

## Description

### Technical Field

The present invention relates to an air conditoner, and more particularly to an air conditioner which enables quick heating and reduces the initial power consumption by applying a current into the interior of a compressor of the air conditioner and performing a preheating operation.

### Background Art

Generally, an air conditioner is used for cooing, heating, and purifying air. The air conditioner is installed to create an interior environment more comfortable to a human body by discharging cool and hot air into the interior of a room and purifying the interior air.

The air conditioner includes an indoor unit having an indoor heat exchanger and an outdoor unit having a compressor and an exterior heat exchanger to be controlled. Recently, an air conditioning system including one outdoor unit and a plurality of indoor units commonly using the outdoor unit on one floor or in one building tends to be constructed to save the installation source and to improve the energy efficiency.

On the other hand, in a conventional air conditioner, a motor is provided in the interior of a compressor and the compressor is preheated for a predetermined period of time by using a heater before driving the motor. Then, an excessive power is consumed while the compressor is being preheated.

Further, while the initial power consumption of the air conditioner is large, the heating operation cannot be quickly performed, thereby severely lowering the heating efficiency.

Further, in controlling the preheating operation of the compressor, the air conditioner cannot properly determine the preheating control time and thus the compressor cannot be properly preheated.

Further, since a difference is generated between the pipe temperature of the outdoor unit and the interior temperaturee of the compressor, the interior of the compressor becomes lower than the pipe temperature of the outdoor unit, thereby generating malfunctioning due to introduction of a liquid refrigerant.

EP 1 271 071 discloses an air conditioner according to the preamble of claim 1. KR 2002-0088643A, KR 10-0225641 B1, JP-H10-141739A, JP 0 9271135A and JP-H07-167504A also disclose aspects of pre-heating control for compressors.

### Disclosure of Invention

### Technical Problem

Accordingly, the present invention has been developed in order to address the above-mentioned problems occurring in the prior art, and it would be desirable to provide an air conditioner and a control method of the air conditioner which performs the preheating operation of a compressor by determining a preheating control time according to a predetermined condition.

It would also be desirable to provide an air conditioner and a control method of the air conditioner which reduces the initial power consumption generated in preheating a compressor.

It would also be desirable to provide an air conditioner and a control method of the air conditioner which enables quick heating operation by the preheating operation of the compressor.

It would also be desirable to provide an air conditioner and a control method of the air conditioner which prevents malfunctioning of the air conditioner as a liquid refrigerant is introduced into a compressor due to the difference between the pipe temperature of an outdoor unit and the interior temperature of the compressor.

### Technical Solution

According to the present invention the above objection is solved by the features of claim 1.

### Advantageous Effects

According to an air conditioner and a control method as described herein, since a heater for preheating a compressor is not separately included by applying a current to a motor of the compressor and preheating the compressor through the heat generation of a coil in the case in which the preheating operation _ conditions of the compressor such as the exterior temperature and the operation states of an indoor unit and an outdoor unit are satisfied, the cost for the heater can be saved.

Further, since the preheating operation is easily performed by using the rotor aligning method of the compressor motor, the power consumption and the preheating time are reduced, thereby enabling quick heating operation.

Further, since a quick heating operation according to the preheating operation of the compressor is enabled, the function of a product is improved and the convenience for a user is improved.

Further, since the compressor is preheated according to the exterior temperature, introduction of a liquid refrigerant into the compressor due to the temperature difference between the interior and the exterior thereof, lowering of the viscocity of an oil in the interior of the compressor at a low temperature is prevented, malfunctioning of the air conditioner is reduced, and the efficiency of the air conditioner is improved.

### Brief Description of the Drawings

The above and other objects, features, and advantages of the present invention will be more apparent from the following detailed description taken in conjunction with the accompanying drawings, in which:
FIG. 1 is a block diagram showing an air conditioner according to the present invention;
FIG. 2 is a circuit diagram showing a converter and an inverter of an air conditioner according to the present invention;
FIG. 3 is a circuit diagram showing an inverter of an air conditioner according to the present invention in detail;
FIG. 4 is a graph showing align currents and voltages applied to a compressor of an air conditioner according to the present invention;
FIG. 5 is a graph showing waves of align currents, voltages, and consumption of power which are applied to a compressor of an air conditioner according to the present invention; and
FIG. 6 is a flow chart showing a preheating control method of a compressor of an air conditioner according to the present invention.

### Best Mode for Carrying Out the Invention

Hereinafter, preferred embodiments of the present invention will be described in detail with reference to the accompanying drawings.

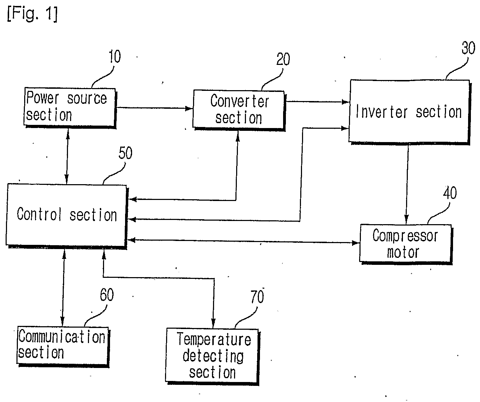

FIG. 1 is a block diagram showing an air conditioner according to the present invention.

Referring to FIG. 1, the air conditioner according to the present invention includes a power source section 10 to which an operation power source is supplied, a converter section 20 converting a power source input from the power source section 10 to a DC power source, an inverter section 30 converting an output power source of the converter section 20 to an AC power source for driving a compressor motor, and a compressor motor 40 operated by an operation power source input from the inverter section 30.

Further, the air conditioner includes a communication section 60 transmitting and receiving data to and from the exterior, a temperature detecting section 70 provided in the interior or exterior of the air conditioner, for measuring a temperature, a control section 50 controlling the drive of the converter section 20 and the inverter section 30 and controlling the air conditioner so that the compressor is preheated by controlling the drive of the compressor motor 40 according to the temperature value detected and input by the temperature detecting section 70.

More particularly, the temperature detecting section 70 includes a plurality of temperature sensors installed in the interior and exterior of an outdoor unit or an indoor unit of the air conditioner to transfer the measured temperature data to the control section 50.

The control section 50 applies signals to the converter section 20 or the inverter section 30 so that the converter section 20 rectifies and flatten the power source input from the power source section 10 to output a DC power source and controls the air conditioner so that a power source for driving the compressor is supplied from the inverter section 30.

Then, in the case in which the preheating operation condition of the compressor is satisfied, the control section 50 controls the air conditioner so that a constant current is input to the compressor motor 40 by controlling the drive of the converter section 20 or the inverter section 30.

Namely, in the case in which a predetermined condition such as the temperature measured by the temperature detecting section 70 and the operation state of the compressor is satisfied, the control section 50 applies a current of a predetermined magnitude to the compressor motor 40 so that the compressor performs the preheating operation.

For example, if all of the conditions in which the exterior temperature detected by the temperature detecting section 70 is below 0 degree Celsius, the discharge temperature of the compressor is below 10 degrees Celsius, and the compressor is turned off and stopped are satisfied, the control section 50 performs the preheating operation of the compressor.

Here, the exterior temperature and the discharge temperature of the compressor can be variably set.

Further, if a predetermined condition is satisfied according to the operation state of the compressor, the control section 50 controls the converter section 20, the inverter section 30, and the compressor motor 40 according to the operation state of the compressor so as to release the preheating operation.

Namely, if at least one of the conditions in which the exterior temperature detected by the temperature detecting section 70 is above 20 degrees Celsius, the discharge temperature of the compressor is above 20 degrees Celsius, and the indoor unit is turned on and is operated is satisfied, the control section 50 releases the preheating operation of the compressor.

Here, the reference exterior temperature or the discharge temperature of the compressor according to the release of the preheating operation can be variably set.

Further, the control section 50 determines the operation of the outdoor unit or the indoor unit by preforming data communication between the outdoor unit and the indoor unit through the communication section 60 and transmits the preheating state data.

Hereinafter, the convertor section 20 and the inverter section 30 will be described in detail.

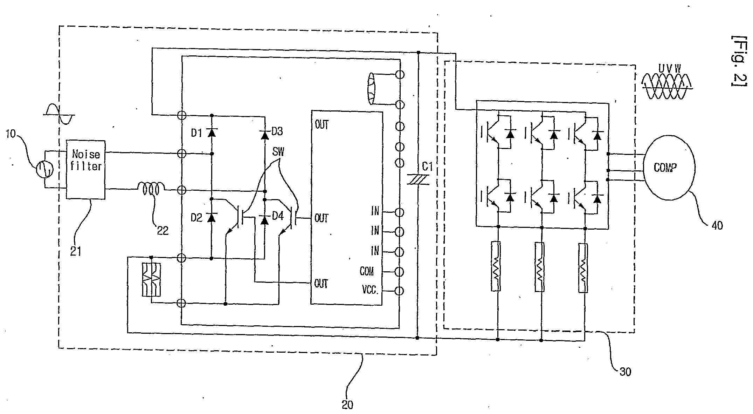

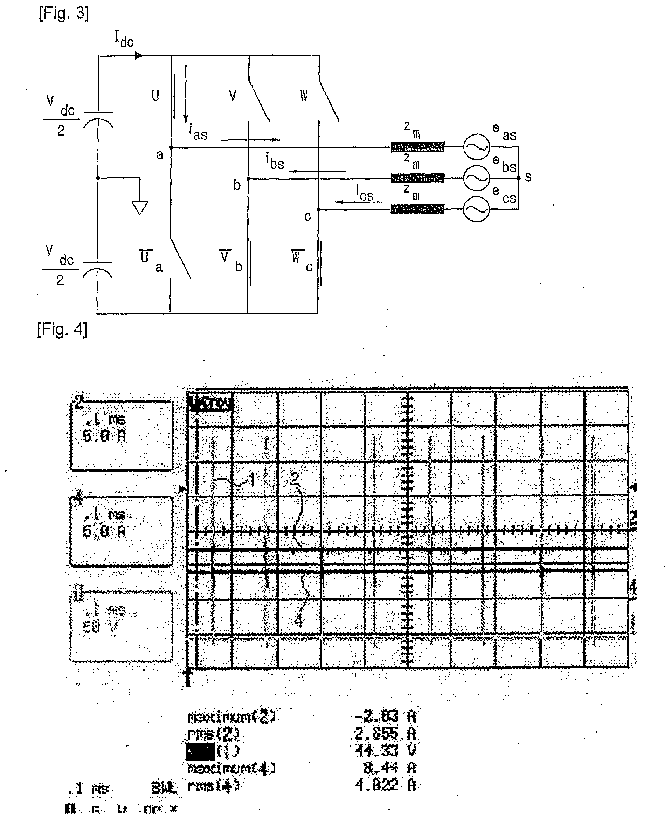

FIG. 2 is a circuit diagram showing a converter and an inverter of an air conditioner according to the present invention. FIG. 3 is a circuit diagram showing an inverter of an air conditioner according to the present invention in detail.

First, referring to FIG. 2, in the converter section 20 according to the present invention, an AC power source of the power source section 10 is applied through a noise filter 21 via a reactor 22 and the operation mode is set according to the ON/OFF state of a switch SW.

Then, an IGBT (Insulated Gate Bipolar Transistor) which is a switch for high power can be used as the switch SW. Here, the converter section 20 including a PFC (Power Factor Correction) module is exemplified and described.

More particularly, in the case in which the switch SW is turned off, the power source is rectified through connected bridge diodes D1 to D4 and a capacitor C1 is charged.

If the switch SW is turned on for a predetermined period of time, predetermined energy is charged in the reactor 22. If the switch SW is turned off, the energy charged in the reactor 22 is discharged and both end voltage of the capacitor C1 raises the DC link voltage. Then, the energy charged in the reactor 22 can be expressed by the value - L of the reactor multiplied by di/dt.

Here, the ON/OFF states of the switch SW are controlled by control instructions of the control section 50 and accordingly the phase difference of the output voltage and the current is rarely generated.

On the other hand, referring to FIG. 3, the inverter section 30 supplies an operation power source for driving the compressor motor 40 according to PMW (Pulse Width Modulation) method by driving at least one swtich receiving a DC voltage output from the converter section 20 and included according to the control instruction of the control section 50.

Then, the PMW controls the output of a load by making the frequency of a pulse uniform, changing the duty ratio of the pulse, and changing the average power supplied to the load.

More particularly, the inverter section 30 fixes a rotor of the compressor motor 40 to a predetermined position by controlling the U-V-W phases of the three phase power source and applying a constant current to the compressor motor 40 in the case in which a control instruction according to the preheating operation of the compressor is input from the control section 50.

Then, the inverter section 30 fixes the rotor of the compressor motor 40 by simultaneously turning on the U-V-W phases of the three phase power source and applying a current to the compressor motor 40.

In the case in which the current is applied to the compressor motor 40 from the inverter section 30 to fix the rotor, heat is generated in a coil to preheat the compressor.

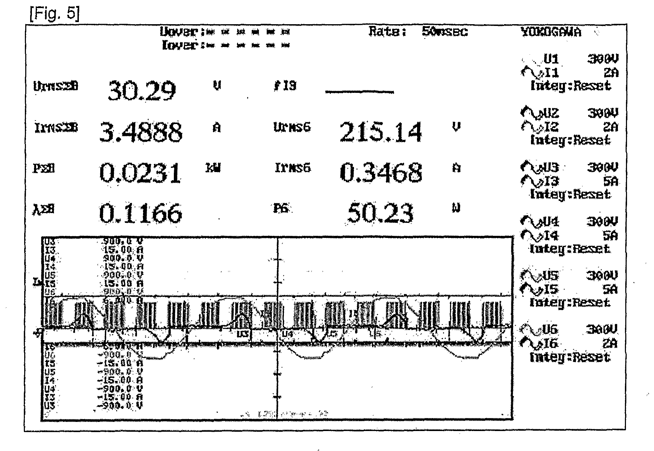

Then, the actual voltage and current applied to the compressor motor 40 are shown in FIGs. 4 and 5.

FIG. 4 is a graph showing align currents and voltages applied to the compressor of the air conditioner according to the present invention. FIG. 5 is a graph showing waves of align currents, voltages, and consumption of power which are applied to the compressor of the air conditioner according to the present invention.

For example, if the current of the U phase input to the compressor motor 40 is 4 A, the current of the V phase becomes -2A. Further, the preheating power consumption is approximately 50 W.

Then, the consumed current and power generated during the preheating operation of the compressor motor 40 can be variably set.

If the compressor is preheated, in the case in which at least one of the preheating releasing conditions are satisfied according to the discharge temperature of the compressor, the exterior temperature, and the operation of the indoor unit, the control section 50 controls the converter section 20, the inverter section 30, and the compressor motor 40 so that the preheating operation of the compressor can be released.

Here, the control section 50 performs the heating operation of the air conditioner by inputting a normal power source to the compressor.

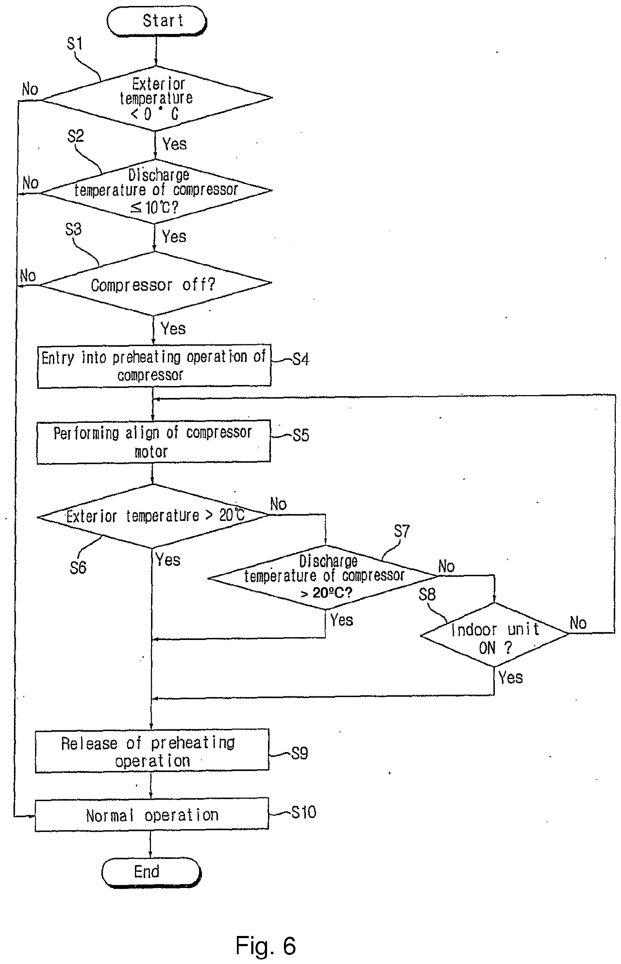

FIG. 6 is a flow chart showing a preheating control method of the compressor of the air conditioner according to the present invention.

Referring to FIG. 6, in the case in which the air conditioner is operated according ot the input of an operation instruction and setting of time and temperature, the preheating operation of the compressor is performed if a predetermined condition is satisfied before performing the heating operation.

More particularly, first, the step of determining whether the exterior temperature detected by the temperature detecting section 70 is below a first preheating reference temperature is performed.(S1) Here, it is preferable that the first preheating reference temperature is 0 degree Celsius.

After the determination, if the detected exterior temperature is below the first preheating reference temperature, the discharge temperature is detected next and the step of determining whether the discharge temperature of the compressor is below a second preheating reference temperature is performed.(S2) Here, it is preferable that the second preheating reference temperature is 10 degrees Celsius.

If the discharge temperature of the compressor is below the second preheating reference temperature, the step of determining whether the current compressor state is the OFF state is performed.(S3) After the determination, if the compressor is in the OFF state, the control section 50 controls the air conditioner so that the preheating operation of the compressor is peformed.(S4)

Namely, the present invention performs the preheating operation in the case in which all the conditions for the preheating operation of the compressor are satisfied, for example, in the case in which the exterior temperature is below 0 degree Celsius, the discharge temperature of the compressor is below 10 degrees Celsius, and the compressor is currently in the OFF state.

If the preheating operation of the compressor is performed, a current for aligning the rotor of the compressor motor 40 is applied. Namely, a three phase power source is applied to the compressor motor 40 and the rotor of the compressor motor is fixed to a predetermined position. Further, if a current is applied to the compressor motor and the rotor is aligned, heat is generated from a coil of the compressor motor and the compressor is preheated by the heat.(S5)

Then, the determination order of the exterior temperature, the discharge temperature of the compressor, and the drive of the compressor can be changed, and the reference temperatures according to the determination of the exterior temperature and the discharge temperature of the compressor can be varied.

On the other hand, if at lease one of the conditions is not satisfied, the air conditioner is normally operated to perform the cooling and heating operations without preheating the compressor.(S10)

As mentioned above, the step of determining whether the preheating operation releasing condition of the compressor is satisfied is performed by continuously detecting the exterior temperature and the discharge temperature of the compressor during the preheating operation of the compressor.

More particularly, the preheating operation of the compressor is released or maintained by determining whether the detected exterior temperature is above the first preheating releasing reference temperature, determining whether the discharge temperature of the compressor is above the second preheating releasing reference temperature, and determining the operation of the indoor unit.(S6 to S8)

Here, the preheating releasing reference temperature on the exterior temperature and the second preheating releasing reference temperature according to the discharge temperature of the compressor can be variably set and it is preferable the reference temperatures are set to 20 degrees Celsius.

After the determination, if at least one of the conditions on the exterior temperature, the discharge temperature of the compressor, and the operation state of the indoor unit is satisfied, the preheating operation of the compressor is released.(S9)

On the other hand, if all of the preheating releasing conditions are not satisfied, the preheating operation is performed by continuously applying the current for aligning the rotor to the compressor motor 40.

Further, if the preheating operation of the compressor is released and completed, the heating or cooling operation is normally performed according to the setting.

According to the present invention, since a heater for preheating the compressor is not separately included by applying a current to the motor of the compressor and preheating the compressor through the heat generation of the coil in the case in which the preheating operation conditions of the compressor are satisfied, the cost for the heater can be saved.

Further, since the preheating operation is easily performed by using the rotor aligning method of the compressor motor, the power consumption and the preheating time are reduced.

### Industrial Applicability

According to an air conditioner and a control method as described herein, since a heater for preheating a compressor is not separately included by applying a current to a motor of the compressor and preheating the compressor through the heat generation of a coil in the case in which the preheating operation conditions of the compressor such as the exterior temperature and the operation states of an indoor unit and an outdoor unit are satisfied, the cost for the heater can be saved.

Further, since the preheating operation is easily performed by using the rotor aligning method of the compressor motor, the power consumption and the preheating time are reduced, thereby enabling quick heating operation. Therefore, the industrial applicability of the present invention is high.

## Claims

1. An air conditioner comprising:
an inverter section (30) applying an operation power source (10) to a motor (40) of a compressor; and
a control section (50) controlling the air conditioner so that the compressor is normally operated if a preheating operation condition of the compressor is not satisfied, so that the compressor enters a preheating operation condition, in which a predetermined current is applied to the motor of the compressor, if the preheating operation condition of the compressor is satisfied, and so that the compressor is released from the preheating operation condition if a preheating releasing condition is satisfied,
**characterised in that**:
whether the preheating operation condition of the compressor is satisfied is determined according to exterior temperature, discharge temperature of the compressor, and operation state of the compressor,
whether the preheating releasing condition is satisfied is determined according to the exterior temperature, the discharge temperature of the compressor, and the operation state of an indoor unit of the air conditioner during the preheating operation,
the preheating operation condition of the compressor is satisfied when the exterior temperature is below a first preheating reference temperature, and the discharge temperature of the compressor is below a second preheating reference temperature, and the compressor is turned off; and
the preheating releasing condition of the compressor is satisfied when the exterior temperature is above a first preheating releasing temperature, or the discharge temperature of the compressor is above a second preheating releasing temperature, or the indoor unit is operated.

2. An air conditioner according to claim 1, wherein the inverter section applies a current for alignment of a rotor to the motor of the compressor during the preheating operation of the compressor.

3. An air conditioner according to claim 2, wherein the inverter section applies the current to the motor of the compressor by simultaneously turning on three phases of a three phase power source.

## Patentansprüche

1. Klimaanlage, die aufweist:
eine Invertersektion (30), die eine Betriebsstromquelle (110) an einen Motor (40) eines Kompressors koppelt; und
eine Steuersektion (50) zum Steuern der Klimaanlage in einer Weise, dass der Kompressor normal betrieben wird, wenn eine Vorheizbetriebsbedingung des Kompressors nicht erfüllt ist, dass der Kompressor eine Vorheizbetriebsbedingung einnimmt, bei der dem Motor des Kompressors ein vorgegebener Strom zugeführt wird, wenn die Vorheizbetriebsbedingung des Kompressors erfüllt ist, und dass der Kompressor aus der Vorheizbetriebsbedingung freigegeben wird, wenn eine Vorheizfreigabebedingung erfüllt ist,
**dadurch gekennzeichnet, dass**:
gemäß der Außentemperatur, der Ausstoßtemperatur des Kompressors und dem Betriebszustand des Kompressors bestimmt wird, ob die Vorheizbetriebsbedingung des Kompressors erfüllt ist,
gemäß der Außentemperatur, der Ausstoßtemperatur des Kompressors und dem Betriebszustand einer Innenraumeinheit der Klimaanlage während des Vorheizbetriebs bestimmt wird, ob die Vorheizfreigabebedingung erfüllt ist,
die Vorheizbetriebsbedingung des Kompressors erfüllt ist, wenn die Außentemperatur unterhalb einer ersten Vorheizreferenztemperatur liegt, die Ausstoßtemperatur des Kompressors unterhalb einer zweiten Vorheizreferenztemperatur liegt und der Kompressor abgeschaltet ist; und
die Vorheizfreigabebedingung des Kompressors erfüllt ist, wenn die Außentemperatur oberhalb einer ersten Vorheizfreigabetemperatur liegt oder die Ausstoßtemperatur des Kompressors oberhalb einer zweiten Vorheizfreigabetemperatur liegt oder die Innenraumeinheit in Betrieb ist.

2. Klimaanlage nach Anspruch 1, wobei die Invertersektion dem Motor des Kompressors während des Vorheizbetriebs des Kompressors einen Strom zum Ausrichten eines Rotors zuführt.

3. Klimaanlage nach Anspruch 2, wobei die Invertersektion dem Motor des Kompressors Strom durch simultanes Anschalten von drei Phasen einer Dreiphasenstromquelle zuführt.

## Revendications

1. Climatiseur comprenant :
une section d'onduleur (30) appliquant une source d'alimentation de fonctionnement (10) à un moteur (40) d'un compresseur ; et
une section de commande (50) commandant le climatiseur de sorte que le compresseur fonctionne normalement si une condition d'opération de préchauffage du compresseur n'est pas remplie, que le compresseur entre dans une condition d'opération de préchauffage, dans laquelle un courant prédéterminé est appliqué au moteur du compresseur, si la condition d'opération de préchauffage du compresseur est remplie, et que le compresseur ne soit pas soumis à la condition d'opération de préchauffage si une condition d'abandon de préchauffage est remplie,
**caractérisé en ce que** :
on détermine si la condition d'opération de préchauffage du compresseur est remplie en fonction de la température extérieure, de la température de refoulement du compresseur et de l'état de fonctionnement du compresseur,
on détermine si la condition d'abandon de préchauffage est remplie en fonction de la température extérieure, de la température de refoulement du compresseur et de l'état de fonctionnement d'une unité intérieure du climatiseur pendant l'opération de préchauffage,
la condition d'opération de préchauffage du compresseur est remplie lorsque la température extérieure est inférieure à une première température de préchauffage de référence, et que la température de refoulement du compresseur est inférieure à une deuxième température de préchauffage de référence, et que le compresseur est arrêté ; et
la condition d'abandon de préchauffage du compresseur est remplie lorsque la température extérieure est supérieure à une première température d'abandon de préchauffage ou que la température de refoulement du compresseur est supérieure à une deuxième température d'abandon de préchauffage ou que l'unité intérieure est actionnée.

2. Climatiseur selon la revendication 1, dans lequel la section d'onduleur applique un courant pour l'alignement d'un rotor au moteur du compresseur pendant l'opération de préchauffage du compresseur.

3. Climatiseur selon la revendication 2, dans lequel la section d'onduleur applique le courant au moteur du compresseur en mettant sous tension simultanément trois phases d'une source d'alimentation triphasée.
